# EUROPÄISCHE PATENTSCHRIFT

(11) **EP 0 543 053 B1**
(45) Veröffentlichungstag und Bekanntmachung des Hinweises auf die Patenterteilung: **19.07.1995**
(21) Anmeldenummer: 91119971.9
(22) Anmeldetag: 22.11.1991
(51) Int. Cl.: G01F 1/60

(54) **Schaltungsanordnung für eine Vorrichtung zur Messung der Stärke des Stroms einer elektrische Ladungen enthaltenden Flüssigkeit**
Circuit arrangement for a device to measure the flow rate of a fluid containing electrical charges
Circuit pour un dispositif de mesure du débit d'un fluide contenant des charges électriques

(43) Veröffentlichungstag der Anmeldung: 26.05.1993
(73) Patentinhaber: Fischer & Porter GmbH, D-37079 Göttingen (DE)
(72) Erfinder: Nissen, Peter, Dr., W-3405 Rosdorf (DE)
(74) Vertreter: Fincke, Karl Theodor, Dipl.-Phys. Dr.

(56) Entgegenhaltungen:
- EP-A- 0 416 866
- DE-A- 2 743 954
- GB-A- 2 201 785
- CONTROL ENGINEERING Bd. 37, Nr. 10, September 1990, NEWTON, MA ,USA Seiten 20 -21; H. OSTLING: 'dual-frequency excitation sets new magmeter performance standard'

## Beschreibung

Die Erfindung betrifft eine Vorrichtung zur Messung der Stärke des Stroms einer elektrische Ladungen enthaltenden Flüssigkeit, die ein Rohrstück durchfließt, mit den im Oberbegriff des Anspruchs 1 definierten Merkmalen.

Eine Vorrichtung dieser Art ist nach der Zeitschrift Control Engineering 37 (1990) September, Nr. 10, Newton, MA, US, Seite 20 und 21, bekannt. Diese Vorrichtung weist nur einen Elektromagneten auf und keine gesteuerten Gleichrichter.

Aus der GB-A-2 201 785 ist eine ähnliche Vorrichtung bekannt, bei der in Reihe gesteuerte Gleichrichter und Bandpaßfilter in dieser Reihenfolge geschaltet sind.

Aus der DE-A-2743954 ist eine Vorrichtung bekannt, die zwei Elektromagnete auf einander gegenüberliegenden Seiten des Rohrstücks aufweist.

Die GB-A-2 201 785 offenbart eine Vorrichtung gemäß Oberbegriff. Dabei wird das Magnetfeld von einer simultan mit zwei Frequenzen beaufschlagten Spule erzeugt.

Die EP-A-416 866 beschreibt als Stand der Technik (Sp.2, Z.6ff) einen Durchflußmesser, bei dem ein Magnetfeld in Form einer Überlagerung zweier Frequenzen erzeugt wird und das an den Elektroden abgenommene Signal durch Filter in die beiden Komponenten zerlegt wird, was nach Aussagen dieser Schrift je nach Abstand der beiden Frequenzen nicht in dem gewünschten Maße möglich ist. Zur Verbesserung schlägt die Schrift eine zeitliche Trennung der beiden Magnetfeldkomponenten unterschiedlicher Frequenz vor, indem zwei getrennte Spulen jeweils zeitlich versetzt getrennt mit unterschiedlichen Frequenzen beaufschlagt werden und zwei mit der jeweiligen Frequenz gesteuerte Gleichrichter (Sp.7,Z.40-43;
Sp.8,Z.14-17) mit der gleichen zeitlichen Versetzung aktiviert werden. Jede Spule besteht aus zwei in Serie geschalteten Teilstücken, die auf gegenüberliegenden Seiten des Rohres angeordnet sind. Alternativ wird eine örtliche Trennung der beiden Magnetfeldkomponenten vorgeschlagen.

Aufgabe der Erfindung ist es, eine Vorrichtung nach dem Oberbegriff des Anspruchs 1 anzugeben, deren zeitliches Ansprechverhalten besonders kurz ist.

Zur Lösung dieser Aufgabe ist die Vorrichtung gekennzeichnet durch die Merkmale des Anspruchs 1.

Da bei der erfindungsgemäßen Vorrichtung die von den Elektroden abgenommene Spannung proportional zur Summe beider Magnetfelderregungen unterschiedlicher Frequenz ist und diese Magnetfelderregungen unterschiedlicher Frequenz im Betriebszustand stets vorliegen, ergibt sich die gewünschte Verkürzung des Ansprechverhaltens. Durch die Bandpaßfilter werden die Anteile unterschiedlicher Frequenz der von den Elektroden abgegebenen Spannung aufgeteilt und zur Korrektur des Ausgangssignals bei gestörtem Strömungsprofil im Rohrstück oder zur Korrektur bei nicht vollständig gefülltem Rohrstück verwendet.

Ist ein sehr rasches Ansprechverhalten erwünscht, so werden entsprechend hohe Erregerfrequenzen verwendet. Dies widerspricht an sich dem Wunsch nach möglichst niedrigen Erregerfrequenzen zur Erzielung eines stabilen Ausgangssignals, wenn der Flüssigkeitsstrom Null ist. Um diesen einander widersprechenden Wünschen zu begegnen, wird bevorzugt jeder Elektromagnet mit wenigstens zwei unterschiedlichen Frequenzen gespeist.

Als Stromquellen können Wechselstromquellen verwendet werden, aber auch Impulsstromquellen, deren Frequenzspektrum die gewünschten Frequenzen enthält.

Für sich rasch ändernde Vorgänge, die meist auf Störungen beruhen, werden bevorzugt die hohen Erregerfrequenzen ausgewertet. Für die Ermittlung der Stärke eines stationären Flüssigkeitsstroms werden bevorzugt die niedrigeren Erregerfrequenzen verwendet. Um dies zu erreichen, ist die Schaltungsanordnung bevorzugt dadurch gekennzeichnet, daß zwischen die Gleichrichter und die Korrekturschaltung Logikbaugruppen geschaltet sind, mittels denen zur Erfassung sich rasch ändernder Vorgänge im Flüssigkeitsstrom nur die den höheren Frequenzen zugeordneten Gleichrichter und zur Erfassung sich langsam ändernder Vorgänge im Flüssigkeitsstrom nur die den niedrigeren Frequenzen zugeordneten Gleichrichter mit der Korrekturschaltung zu verbinden sind.

Die Erfindung wird im folgenden an Ausführungsbeispielen unter Hinweis auf die beigefügten Zeichnungen beschrieben.

Fig. 1 zeigt ein Blockschaltbild einer Schaltungsanordnung, bei der zwei Elektromagneten mit unterschiedlichen Frequenzen gespeist werden.

Fig. 2 zeigt ein Blockschaltbild einer Schaltungsanordnung, bei der zwei Elektromagneten mit je zwei unterschiedlichen Frequenzen gespeist werden.

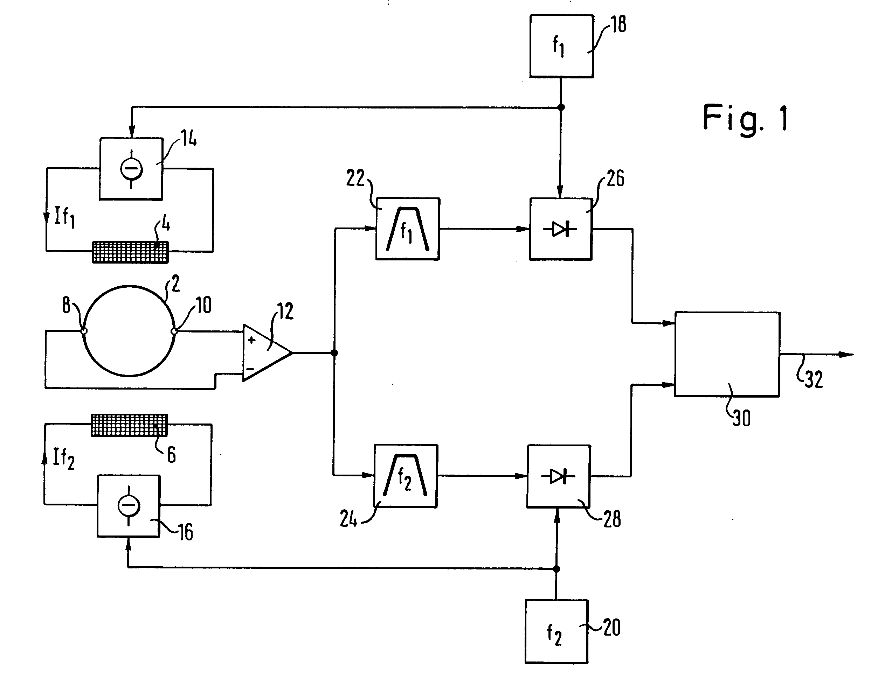

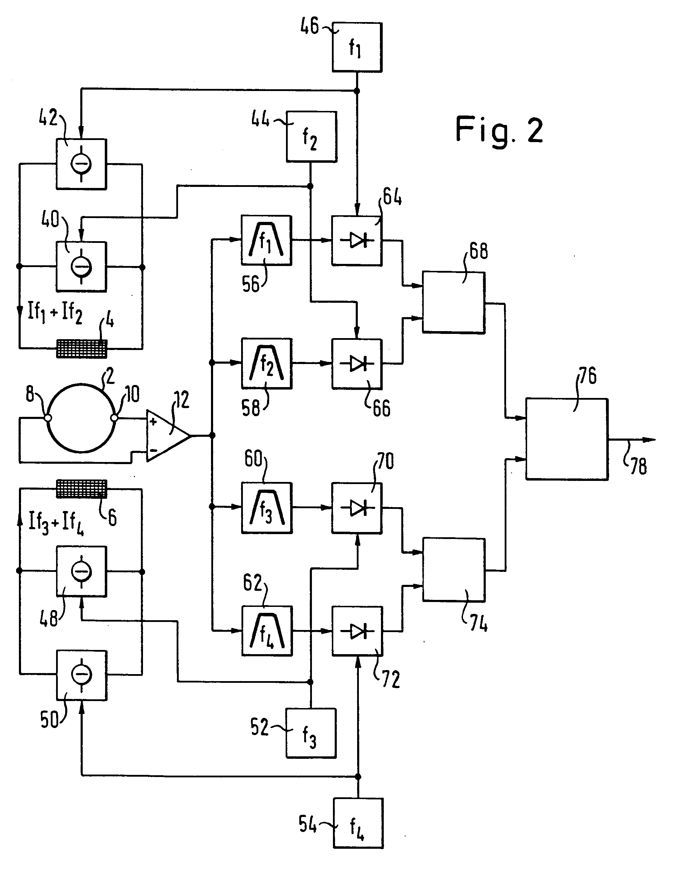

Die Schaltungsanordnungen nach Fig. 1 und 2 dienen der Messung der Stärke des Stroms einer elektrische Ladungen enthaltenden Flüssigkeit, die ein Rohrstück 2 durchfließt. Jede Vorrichtung hat in diesem Ausführungsbeispiel zwei Elektromagneten 4, 6 und zwei Elektroden 8, 10, die an Eingängen eines Verstärkers 12 liegen.

Bei der Schaltungsanordnung nach Fig. 1 sind die beiden Elektromagneten 4, 6 durch je eine Stromtreiberschaltung 14, 16 mit Wechselströmen der Frequenz If₁ und If₂ gespeist, wobei f₁ ≠ f₂. Die Stromtreiberschaltungen 14, 16 werden von Oszillatoren 18, 20 der Frequenz f₁ bzw. f₂ gesteuert. Der Ausgang des Verstärkers liegt am Eingang eines Bandpaßfilters 22 für die Frequenz f₁ und eines Bandpaßfilters 24 für die Frequenz f₂. Die Ausgänge der Bandpaßfilter 22 und 24 sind über Gleichrichter 26, 28 an eine Korrekturschaltung 30 angeschlossen, die über eine Leitung 32 ein korrigiertes Ausgangssignal liefert, das der Stärke des Flüssigkeitsstroms durch das Rohrstück 2 entspricht. Die Gleichrichter 26, 28 sind Synchronisiergleichrichter, die von den Oszillatoren 18, 20 gesteuert werden.

Bei der Schaltungsanordnung nach Fig. 2 liegt der Elektromagnet 4 parallel zu zwei Stromtreiberschaltungen 40, 42, von denen die Stromtreiberschaltung 40 von einem Oszillator 44 mit der Frequenz f₂ und die Stromtreiberschaltung 42 von einem Oszillator 46 mit der Frequenz f₁ gesteuert wird. Durch den Elektromagneten 4 fließen somit Wechselströme If₁ und If₂, wobei f₁ ≠ f₂. Der Elektromagnet 6 wird parallel von zwei Stromtreiberschaltungen 48, 50 gespeist, von denen die Stromtreiberschaltung 48 von einem Oszillator 52 mit der Frequenz f₃ und die Stromtreiberschaltung 50 von einem Oszillator 54 mit der Frequenz f₄ gesteuert wird, wobei f₁ ≠ f₂ ≠ f₃ ≠ f₄. Durch den Elektromagneten 6 fließt also ein Wechselstrom If₃ der Frequenz f₃ und If₄ der Frequenz f₄.

Aus den eingangs genannten Gründen ist f₁ < f₂ und f₃ < f₄.

Der Ausgang des Verstärkers ist parallel an die Eingänge von vier Bandpaßfiltern 56, 58, 60, 62 für die Frequenzen f₁, f₂, f₃ und f₄ angeschlossen. Die Ausgänge der Bandpaßfilter 56, 58 liegen über Gleichrichter 64, 66 am Eingang einer Logikschaltung 68. Die Ausgänge der Bandpaßfilter 60, 62 liegen über Gleichrichter 70, 72 an Eingängen einer Logikschaltung 74. Die Gleichrichter 64, 66, 70, 72 sind Synchronisiergleichrichter und werden von den Oszillatoren 44, 46, 52 und 54 gesteuert.

Die Ausgänge der Logikschaltungen 68 und 74 sind mit einer Korrekturschaltung 76 verbunden, die über eine Leitung 78 das im oben angegebenen Sinne korrigierte Ausgangssignal liefert.

## Patentansprüche

1. Vorrichtung zur Messung der Stärke des Stroms einer elektrische Ladungen enthaltenden Flüssigkeit, die ein Rohrstück (2) durchfließt, mit einer an eine Stromquellenanordnung (14, 16; 40, 42, 48, 50) angeschlossenen Elektromagnetanordnung (4, 6), die ein den Flüssigkeitsstrom im Rohrstück (2) durchsetzendes Magnetfeld erzeugt, mit wenigstens zwei der Abnahme von Meßspannungen dienenden, von Ladungsverschiebungen in der Flüssigkeit beeinflußten Elektroden (8, 10), deren mittlere Verbindungslinie den Flüssigkeitsstrom im Bereich des Magnetfelds durchsetzt, und mit einer an die Elektroden (8, 10) angeschlossenen Korrekturschaltung (30; 76), die ein nur geringfügig von dem Strömungsprofil des Flüssigkeitsstroms im Rohrstück (2) und/oder dem Pegel der Flüssigkeit im Rohrstück (2) abhängiges, der Stärke des Flüssigkeitsstroms entsprechendes Ausgangssignal erzeugt, bei der die Elektromagneten (4, 6) von ihren Stromquellen (14, 16; 40, 42, 48, 50) mit unterschiedlichen Frequenzen (f₁, f₂; f₁, f₂, f₃, f₄) gespeist sind und bei der zwischen den Elektroden (4, 6) und der Korrekturschaltung (30; 76) parallel zueinander mit diesen unterschiedlichen Frequenzen (f₁, f₂; f₁, f₂, f₃, f₄) gesteuerte Gleichrichter (26, 28, 64, 66, 70, 72) liegen, wobei die von den Elektroden abgenommene Spannung proportional zur Summe der Magnetfelderregungen unterschiedlicher Frequenz ist und diese Magnetfelderregungen unterschiedlicher Frequenz im Betriebszustand stets erfolgen,
**dadurch gekennzeichnet**, daß zwei Elektromagneten (4, 6) auf einander gegenüberliegenden Seiten des Rohrstücks (2) angeordnet und von ihnen einzeln zugeordneten, getrennten und getrennt mit den unterschiedlichen Frequenzen (f₁, f₂; f₃, f₄, f₅, f₆) gesteuerten Stromquellen (14, 16; 40, 42, (48, 50) gespeist sind und daß jedem Gleichrichter (26, 28, 64, 66, 70, 72) ein auf die Steuerfrequenz (f₁, f₂; f₁, f₂, f₃ f₄) des jeweiligen Gleichrichters abgestimmtes Bandpaßfilter (22, 24, 56, 58, 60, 62) vorgeschaltet ist.

2. Vorrichtung nach Anspruch 1, **dadurch gekennzeichnet**, daß die Stromquellen (14, 16; 40, 42, 48, 50) Wechselstromquellen sind.

3. Vorrichtung nach Anspruch 1, **dadurch gekennzeichnet**, daß die Stromquellen (14, 16; 40, 42, 48, 50) Impulsstromquellen sind.

4. Vorrichtung nach einem der vorstehenden Ansprüche, **dadurch gekennzeichnet**, daß jeder Elektromagnet (4, 6) mit wenigstens zwei unterschiedlichen Frequenzen (f₁ und f₂, f₃ und f₄) gespeist ist.

5. Vorrichtung nach Anspruch 4, **dadurch gekennzeichnet**, daß zwischen die Gleichrichter (64, 66, 70, 72) und die Korrekturschaltung (76) Logikbaugruppen (68, 74) geschaltet sind, mittels denen zur Erfassung sich rasch ändernder Vorgänge im Flüssigkeitsstrom nur die den höheren Frequenzen (f₂, f₄) zugeordneten Gleichrichter (66, 72) und zur Erfassung sich langsam ändernder Vorgänge im Flüssigkeitsstrom nur die den niedrigeren Frequenzen (f₁, f₃) zugeordneten Gleichrichter (64, 70) mit der Korrekturschaltung (76) zu verbinden sind.

## Claims

1. An apparatus for measuring the strength of the flow of an electrically charged fluid flowing through a tube section (2), comprising an electromagnetic arrangement (4, 6) which is connected to a power supply arrangement (14, 16; 40, 42, 48, 50) and which produces a magnetic field passing through the flow of fluid in the tube section (2), comprising at least two electrodes (8, 10) which are influenced by charge displacements in the fluid and serve to pick up measuring voltages, the central connecting line of said electrodes passing through the fluid stream in the region of the magnetic field, and comprising a correction circuit (30; 76) which is connected to the electrodes (8, 10), said correction circuit producing an output signal which is, only to a limited extent, dependent on the flow profile of the stream of fluid in the tube section (2) and/or on the level of the fluid in the tube section (2), and which corresponds to the strength of the flow of the fluid, in which apparatus the electromagnets (4, 6) are supplied by their current sources (14, 16; 40, 42, 48, 50) with varying frequencies (f₁, f₂; f₁, f₂, f₃, f₄) and in which, between the electrodes (4, 6) and the correction circuit (30; 76), there are rectifiers (26, 28, 64, 66, 70, 72) positioned parallel to one another and controlled by said varying frequencies (f₁, f₂; f₁, f₂, f₃, f₄,), the voltage picked up from the electrodes being proportional to the sum of the magnetic field excitations of varying frequency and said magnetic field excitations of varying frequency occurring continuously in the operational state, characterised in that two electromagnets (4, 6) are arranged on opposite sides of the tube section (2) and are supplied by separate current sources (14, 16; 40, 42, 48, 50) which are individually associated with said electromagnets and are separately controlled by the varying frequencies (f₁, f₂; f₃, f₄, f₅, f₆), and that a band-pass filter (22, 24, 56, 58, 60, 62) adjusted to the control frequency (f₁, f₂; f1, f₂, f₃, f₄,) of the relevant rectifier is connected before each rectifier (26, 28, 64, 66, 70, 72).

2. An apparatus according to claim 1, characterised in that the current sources (14, 16; 40, 42, 48, 50) are alternating current sources.

3. An apparatus according to claim 1, characterised in that the current sources (14, 16; 40, 42, 48, 50) are pulse current sources.

4. An apparatus according to one of the preceding claims, characterised in that each electromagnet (4, 6) is supplied with at least two different frequencies (f₁, and f₂; f₃, and f₄).

5. An apparatus according to claim 4, characterised in that logic components (68, 74) are connected between the rectifiers (64, 66, 70, 72) and the correction circuit (76), by means of which, for the detection-of quickly changing events in the fluid stream, only the rectifiers (66, 72) associated with the higher frequencies (f₂, f₄), and for the detection of slowly changing events in the fluid stream, only the rectifiers (64, 70) associated with the lower frequencies (f₁, f₃) need to be connected with the correction circuit (76).

## Revendications

1. Dispositif de mesure du débit d'un fluide contenant des charges électriques, qui s'écoule dans une section de tube (2), comprenant un agencement d'électro-aimants (4, 6) raccordé à un agencement de source de courant (14, 16; 40, 42, 48, 50), qui produit un champ magnétique traversant le courant de fluide dans la section de tube (2), au moins deux électrodes (8, 10) servant à la réception de tensions de mesure et soumises à l'influence de déplacements de la charge dans le fluide, dont la ligne de liaison centrale traverse le courant de fluide dans la zone du champ magnétique, et un circuit de correction (30; 76) raccordé aux électrodes (8, 10), qui produit un signal de sortie correspondant au débit du fluide qui ne dépend que faiblement du profil d'écoulement du courant de fluide dans la section de tube (2) et/ou du niveau du fluide dans la section de tube (2), dans lequel les électro-aimants (4, 6) sont alimentés par leurs sources de courant (14, 16; 40, 42, 48, 50) avec des fréquences différentes (f₁, f₂; f₁; f₂; f₃; f₄) et dans lequel sont disposés des redresseurs (26, 28, 64, 66, 70, 72) entre les électrodes (4, 6) et le circuit de correction (30; 76) montés en parallèle et excités par ces diverses fréquences (f₁, f₂; f₁; f₂; f₃; f₄), la tension prélevée des électrodes étant proportionnelle à la somme des excitations du champ magnétique par les diverses fréquences et ces excitations du champ magnétique s'effectuant toujours à une fréquence différente à l'état de fonctionnement,
caractérisé en ce que deux électro-aimants (4, 6) sont disposés sur les côtés mutuellement opposés de la section de tube (2) et sont alimentés par des sources de courant (14, 16; 40, 42, 48, 50) qui leurs sont individuellement associées, qui sont séparées et commandées de façon séparée selon les diverses fréquences (f₁, f₂; f₁; f₂; f₃; f₄), et en ce qu'un filtre passe-bande (22, 24, 56, 58, 60, 62) accordé sur la fréquence de commande (f₁, f₂; f₁; f₂; f₃; f₄) du redresseur respectif est monté en aval de chaque redresseur (26, 28, 64, 66, 70, 72).

2. Dispositif selon la revendication 1, caractérisé en ce que les sources de courant (14, 16; 40, 42, 48, 50) sont des sources de courant alternatif.

3. Dispositif selon la revendication 1, caractérisé en ce que les sources de courant (14, 16; 40, 42, 48, 50) sont des sources de courant impulsionnel.

4. Dispositif selon l'une quelconque des revendications précédentes, caractérisé en ce que chaque électro-aimant (4, 6) est alimenté par au moins deux fréquences différentes (f₁ et f₂, f₃ et f₄).

5. Dispositif selon la revendication 4, caractérisé en ce que des groupes d'éléments logiques (68, 74) sont montés entre les redresseurs (64, 66, 70, 72) et le circuit de correction (76), au moyen desquels, en vue de la détection d'états se modifiant brusquement dans le courant de fluide, seuls les redresseurs (66, 72) associés aux hautes fréquences (f₂, f₄) sont reliés au circuit de correction (76), et en vue de la détection d'états se modifiant lentement dans le courant de fluide seuls les redresseurs (64, 70) associés aux basses fréquences (f₁, f₃) sont reliés au circuit de correction (76).
